# EUROPÄISCHE PATENTANMELDUNG

(11) **EP 3 656 609 A1**
(43) Veröffentlichungstag der Anmeldung: **27.05.2020**
(21) Anmeldenummer: 19210593.0
(22) Anmeldetag: 21.11.2019
(51) Int. Cl.: B60N 2/865, B60N 2/809, B60N 2/75, F16H 19/04

(54) **FAHRZEUGAUSSTATTUNGSTEIL**

(30) Priorität: 26.11.2018 DE 102018009229
(71) Anmelder: GRAMMER AG, 92224 Amberg (DE)
(72) Erfinder: Kober, Steve, 80233 Treuen (DE); Mertel, Walter, 92237 Sulzbach-Rosenberg (DE)
(74) Vertreter: Roche, von Westernhagen & Ehresmann

(57) **Zusammenfassung**

Die Erfindung betrifft ein Fahrzeugausstattungsteil mit einem bewegbaren ersten Teil und einem fahrzeugfesten zweiten Teil, wobei das erste Teil mittels einer Führungsvorrichtung (43) an dem zweiten Teil geführt ist, wobei die Führungsvorrichtung (43) wenigstens eine Zahnschiene (22a, 22b, 24a, 24b) umfasst, die mit einem Zahnrad (21a, 21b, 23a, 23b) in Eingriff steht, wobei die Zahnschiene (22a, 22b, 24a, 24b) einem der Teile und das Zahnrad (21a, 21b, 23a, 23b) dem anderen Teil zugeordnet ist,.

Die Besonderheit besteht darin, dass die Führungsvorrichtung zusätzlich einen Toleranzausgleich umfasst, welcher wenigstens eine Laufschiene (26a, 26b, 28a, 28b) umfasst, die einem der Teile zugeordnet ist und die mit einem Laufrad (25a, 25b, 27a, 27b) in Eingriff steht, welches dem anderen der Teile zugeordnet, wobei das Laufrad (25a, 25b, 27a, 27b) und / oder die Laufschiene (26a, 26b, 28a, 28b) elastisch verformbar ausgebildet ist und zwischen der Laufschiene und dem Laufrad eine Presspassung ausgebildet ist, so dass die zusammenwirkenden Verzahnungen des ersten Teils und des zweiten Teils in eine definierte Position belastet werden.

## Beschreibung

Die Erfindung betrifft ein Fahrzeugausstattungsteil mit einem ersten Teil sowie einem relativ zu dem ersten Teil bewegbaren zweiten Teil.

In der DE 10 2009 038 631 ist eine Kopfstütze beschrieben, die einen Grundkörper aufweist, welcher mittels Tragstangen an der Rückenlehne eines Fahrzeugsitzes lagerbar ist. Ein Kopfanlageteil ist relativ zu dem Grundkörper nach vorne und zurück bewegbar an dem Grundkörper gelagert. Zur Führung des Kopfanlageteils an dem Grundkörper sind zusammenwirkende Verzahnungen an dem Grundkörper und an dem Kopfanlageteil ausgebildet. Die Kopfstütze ist mit einer Spielausgleichvorrichtung versehen. Die Spielausgleichvorrichtung umfasst elastische Lagermittel, welche die zusammenwirkenden Verzahnungen des Kopfanlageteils und des Grundkörpers in Kontakt belasten.

Es war Aufgabe der Erfindung ein Fahrzeugausstattungsteil zu schaffen, welches einfach herstellbar ist und einen funktionssicheren Toleranzausgleich in der Führungsvorrichtung des Kopfanlageteils aufweist.

Die Aufgabe wurde gelöst durch ein Fahrzeugausstattungsteil mit den Merkmalen des Anspruchs 1.

Das Fahrzeugausstattungsteil umfasst ein erstes Teil und ein fahrzeugfestes zweites Teil, wobei das erste Teil mittels einer Führungsvorrichtung relativ zu dem zweiten Teil bewegbar an dem zweiten Teil geführt ist. Die Führungsvorrichtung weist wenigstens eine Zahnschiene auf, die mit einem Zahnrad in Eingriff steht, wobei die Zahnschiene einem der Teile und das Zahnrad dem anderen Teil zugeordnet ist.

Zusätzlich umfasst die Führungsvorrichtung einen Toleranzausgleich, welcher wenigstens eine Laufschiene umfasst, die einem der Teile zugeordnet ist und die mit einem Laufrad in Eingriff steht, welches dem anderen der Teile zugeordnet ist. Z.B. ist die Laufschiene dem ersten Teil und das Laufrad dem zweiten Teil zugeordnet. Das Laufrad und / oder die Laufschiene ist elastisch verformbar ausgebildet und zwischen der Laufschiene und dem Laufrad ist eine Presspassung ausgebildet, so dass die zusammenwirkenden Verzahnungen des ersten Teils und des zweiten Teils bzgl. wenigstens einer Raumdimension in eine bestimmte Richtung belastet werden. Damit können Geräusche vermieden werden, die aufgrund einer unkontrollierten Relativbewegung der zusammenwirkenden Verzahnungen auftreten.

Gemäß einer einfachen Ausführung umfasst die Führungsvorrichtung ein Zahnrad und eine Zahnschiene. Nach einer alternativen Ausführungsform weist die Führungsvorrichtung z.B. zwei Zahnschienen und zwei Zahnräder auf. Auf diese Weise ist es möglich, voneinander beabstandete Bereiche des Ausstattungsteils zu führen. Die Bereiche des Ausstattungsteils können z.B. Seitenbereiche sein.

Jeweils zwei Zahnräder sind z.B. einer Zahnradwelle zugeordnet. Es kann damit ein Gleichlauf der Zahnräder erreicht werden, weil diese mittels der Welle bewegungsverbunden sind. Damit wird verhindert, dass sich ein Bereich des Ausstattungsteils langsamer bewegt, als ein anderer Bereich und auf diese Weise das erste Teil verklemmt.

Gemäß einer besonderen Ausführungsform umfasst die Führungsvorrichtung zwei Zahnradwellen, wobei jede Zahnradwelle mit wenigstens einem Zahnrad, insbesondere mit zwei Zahnrädern, versehen ist und wobei jedes Zahnrad mit einer Zahnschiene in Eingriff steht.

Z.B. stehen wenigstens ein Zahnrad einer ersten Zahnradwelle und je ein Zahnrad einer zweiten Zahnradwelle miteinander in Eingriff. Damit wird ein Gleichlauf der Zahnradwellen erreicht.

Die Führungsvorrichtung weist z.B. wenigstens ein Paar von Laufrad und Laufschiene auf. Mittels dem Paar von Laufrad und Laufschiene werden die zusammenwirkenden Verzahnungen des Zahnrades und der Zahnschiene in Eingriff belastet, derart, dass eine der Verzahnungen gegen die andere Verzahnung gedrückt wird. Das hat die Folge, dass die Verzahnungen sich nicht unkontrolliert in unterschiedliche Relativpositionen bewegen, so dass Geräusche verhindert werden.

Insbesondere wirkt - von der Andruckvorrichtung verursacht - eine Kraft auf das Zahnrad, die etwa senkrecht zu einer Längsachse der Zahnschiene gerichtet ist und das Zahnrad in Eingriff mit der Zahnschiene belastet. Das Laufrad und / oder die Laufschiene sind von einem elastisch verformbaren Material gebildet, welches bei elastischer Verformung eine Rückstellkraft in die Ausgangsform ausbildet. Aufgrund der Verformung des Laufrades beim Einbau wirkt eine Kraft auf das Zahnrad, weil das Laufrad mit dem Zahnrad verbunden ist. Die Kontaktfläche zwischen dem Laufrad und der Laufschiene kann z.B. ohne Struktur ausgebildet sein. Alternativ könnte die Kontaktfläche aber auch eine Struktur aufweisen.

Das Laufrad kann z.B. unmittelbar oder mittelbar mit dem Zahnrad verbunden sein. Z.B. ist das Laufrad an dem Zahnrad angeformt. Alternativ ist z.B. das Laufrad über eine Welle mit dem Zahnrad verbunden. Die Lagerung der Welle muss in diesem Fall eine entsprechende Bewegung der Welle erlauben.

Z.B. ist einer Zahnradwelle wenigstens ein Laufrad und einer mit einem Zahnrad der Zahnradwelle zusammenwirkenden Zahnschiene wenigstens eine Laufschiene zugeordnet, die mit dem Laufrad zusammenwirkt.

Insbesondere ist jedem Zahnrad ein Laufrad zugeordnet ist und jeder Zahnschiene eine Laufschiene zugeordnet, wobei das jeweilige Paar von Laufrad und Laufschiene in Eingriff stehen. Auf diese Weise werden alle zusammenwirkenden Verzahnungen optimal in eine definierte Relativposition belastet.

Wenigsten ein Paar von Laufrad und Laufschiene ist z.B. einem Paar von Zahnrad und Zahnschiene benachbart angeordnet. Z.B. sind das Zahnrad und das Laufrad sowie die Zahnschiene und die Laufschiene unmittelbar nebeneinander angeordnet. Sie können z.B. einteilig geformt sein.

Wenigstens eines der Teile Zahnrad und Zahnschiene sowie Laufrad und Laufschiene kann aus Kunststoff gefertigt sein. Alternativ kommen aber auch andere Materialien, insbesondere Metall, in Betracht.

Das Fahrzeugausstattungsteil ist z.B. eine Kopfstütze, wobei das erste Teil ein Kopfanlageteil ist, welches relativ zu einer Basis als zweitem Teil bewegbar ist.

Das Fahrzeugausstattungsteil ist z.B. eine Armlehne, wobei das erste Teil eine in Längsrichtung verstellbare oder eine in der Höhe verstellbare Armauflage ist, welche an einer Basis als zweitem Teil geführt ist.

Weitere Vorteile ergeben sich anhand der Beschreibung eines in den Fig. schematisch dargestellten Ausführungsbeispiels. Es zeigen:

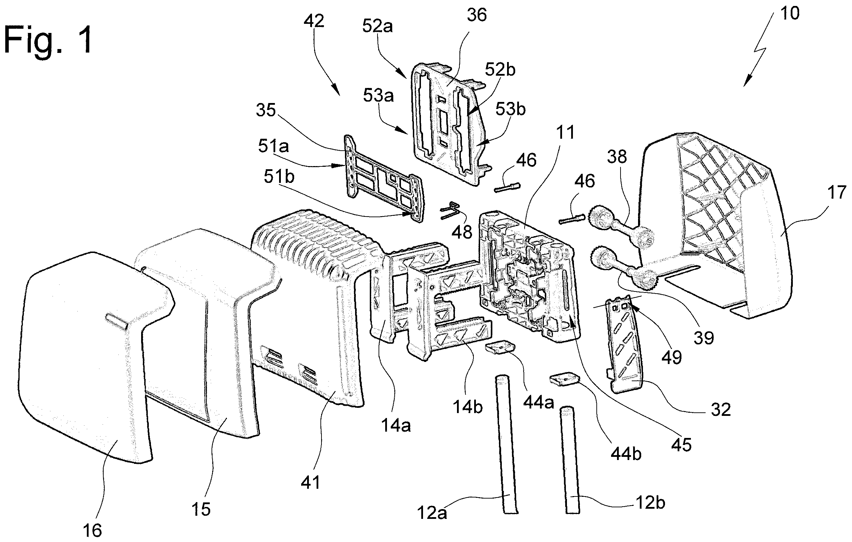

Fig. 1 eine Explosionsdarstellung einer erfindungsgemäßen Kopfstütze als Fahrzeugausstattungsteil im Sinne der Erfindung,

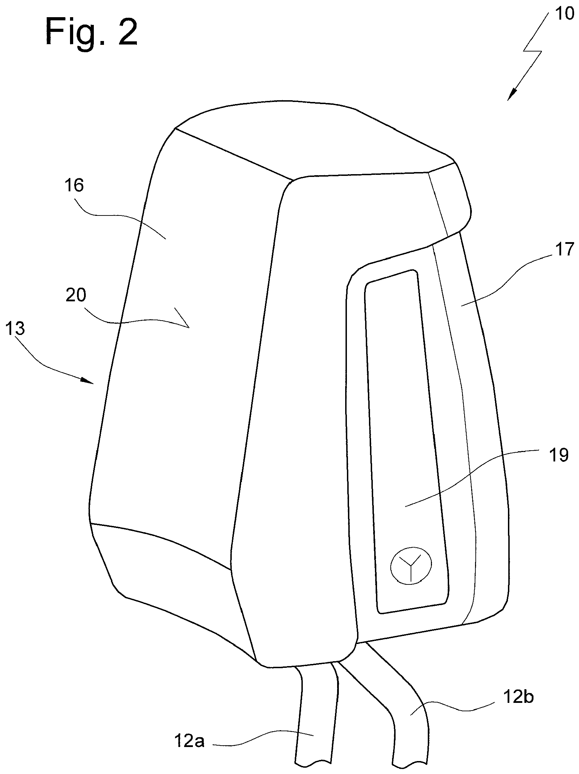

Fig. 2 eine perspektivische Darstellung der Kopfstütze,

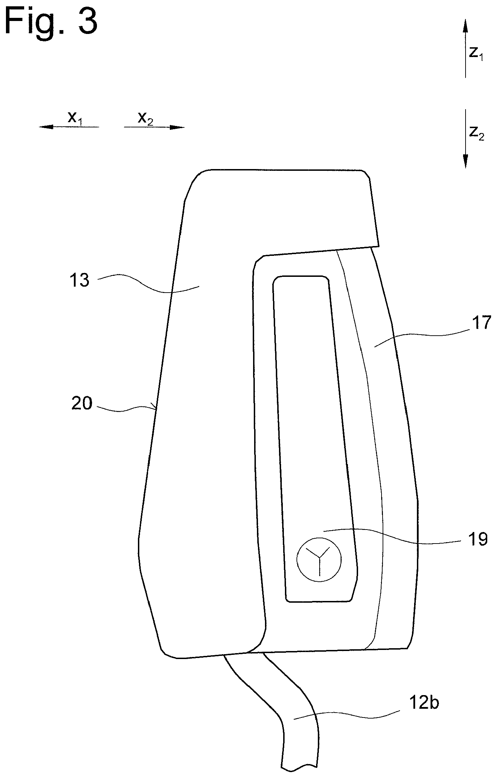

Fig. 3 eine Seitenansicht der Kopfstütze,

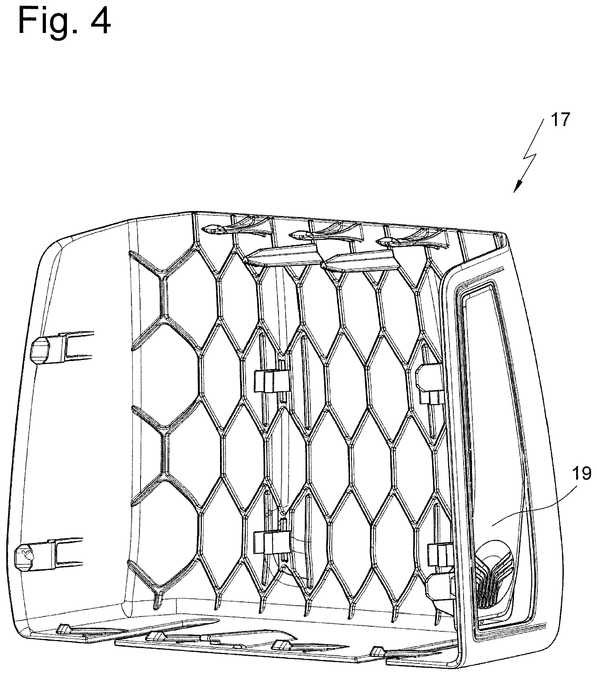

Fig. 4 eine perspektivische Darstellung einer hinteren Blende der Kopfstütze als Einzelteildarstellung,
Fig. 5 eine perspektivische Darstellung einer Baugruppe aus Basis, Lagerelementen des Kopfanlageteils und hinterer Blende,
Fig. 6 eine Darstellung in Anlehnung an Fig. 5, wobei sich eine Verriegelungsvorrichtung in der Löseposition befindet,

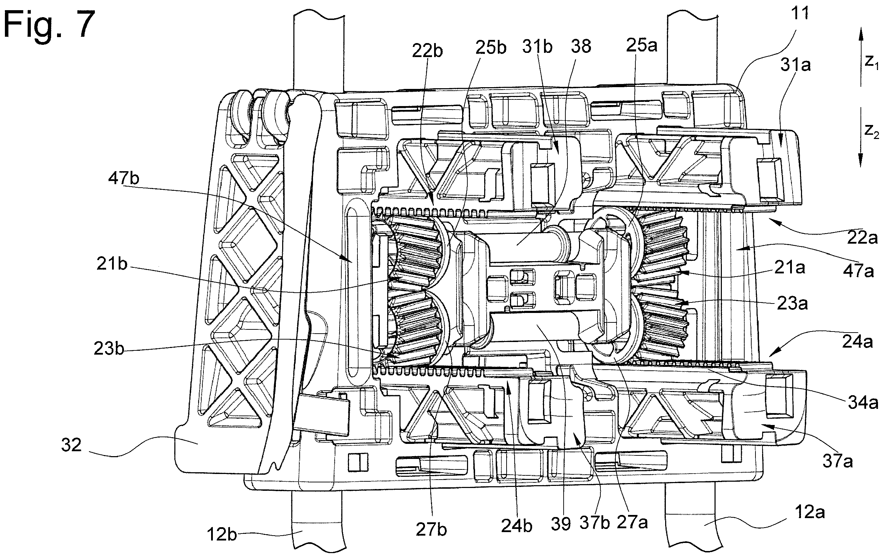

Fig. 7 eine perspektivische rückwärtige Darstellung der an Tragstangen geführten Basis sowie der Lagerelemente,
Fig. 8 eine Rückansicht der Basis mit den Lagerelementen,

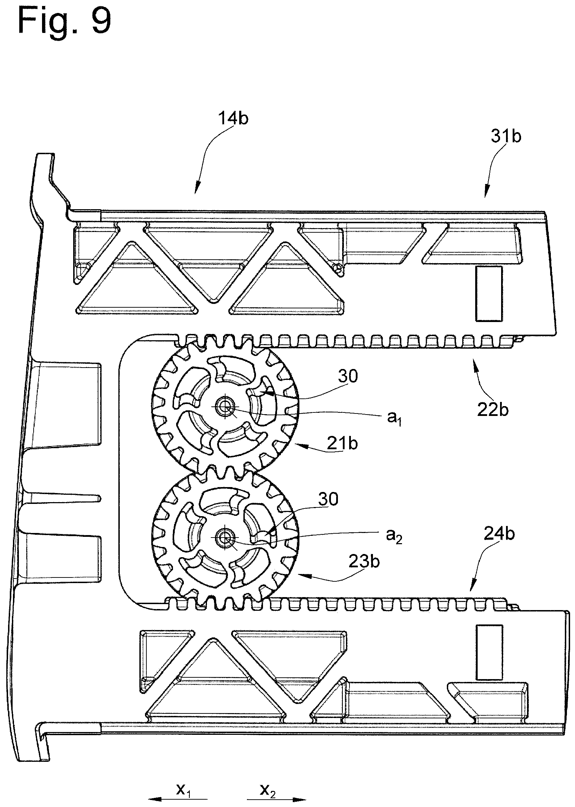

Fig. 9 eine Schnittansicht gemäß Schnittlinie A - A in Fig. 8, wobei von dem Basisteil lediglich die Zahnradwellen dargestellt sind und wobei die Schraffur der Übersichtlichkeit halber nicht dargestellt ist,

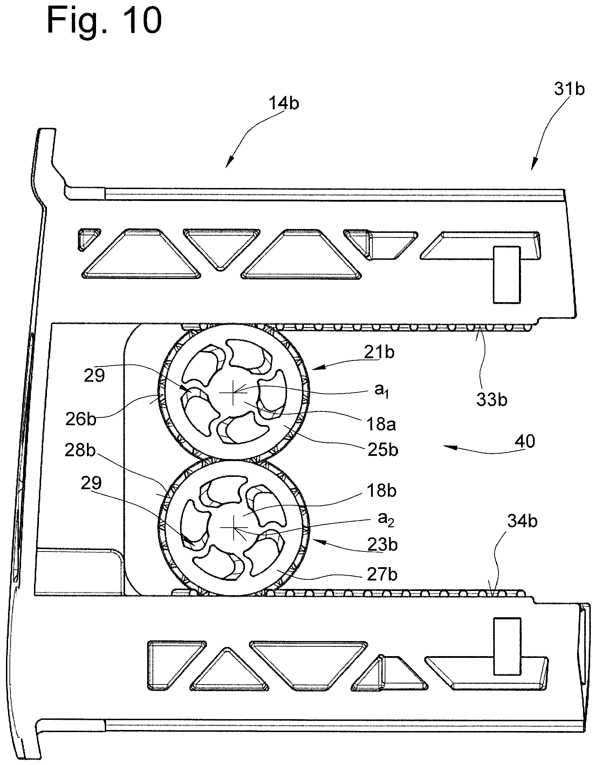

Fig. 10 eine Schnittansicht gemäß Schnittlinie B - B in Fig. 8, wobei von dem Basisteil lediglich die Zahnradwellen dargestellt sind und wobei die Schraffur der Übersichtlichkeit halber nicht dargestellt ist.

Ein Ausführungsbeispiel der Erfindung ist in der nachfolgenden Figurenbeschreibung, auch unter Bezugnahme auf die schematischen Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug auf ein Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zitierten Druckschriften und der beschriebenen Vorrichtungen des Standes der Technik inhaltlich vollumfänglich mit einbezogen, auch zu dem Zweck, einzelne oder mehrere Merkmale der dort offenbarten Gegenstände in einen oder in mehrere Ansprüche der vorliegenden Anmeldung mit aufzunehmen. Auch solche geänderten Ausführungsbeispiele sind - auch wenn sie in den Zeichnungen nicht dargestellt sind - von der Erfindung mit umfasst.

Eine Kopfstütze insgesamt ist in den Figuren mit dem Bezugszeichen 10 bezeichnet.

Die Kopfstütze 10 umfasst eine Basis 11, welche auf Tragstangen 12a und 12b gelagert ist. Alternativ zu den Tragstangen 12a und 12b könnte auch ein Tragstangenbügel verwendet werden. Zur Führung der Basis 11 an den Tragstangen 12a und 12b sind Lagereinleger 44a und 44b an der Basis 11 befestigt, die von den Tragstangen 12a und 12b durchgriffen werden. Die Basis 11 kann so relativ zu den Tragstangen 12a und 12b in die Richtungen z1 und z2 in unterschiedliche Positionen bewegt werden.

Ein Stift 46 durchgreift ein Langloch 47a der Basis 11 und ist an der Tragstange 12a befestigt. Ein weiterer Stift 46 durchgreift ein Langloch 47b der Basis 11 und ist an der Tragstange 12b befestigt. Der Stift 46 bildet mit der Basis 11 eine Verdrehsicherung der Tragstange 12a und 12b relativ zu der Basis 11. Außerdem dient der Stift 46 der Verriegelung der Basis 11 in der eingestellten Höhenposition, wie weiter unten noch beschrieben wird.

Die Kopfstütze 10 umfasst ein relativ zu der Basis 11 in Richtung x1 und x2 verlagerbares Kopfanlageteil 13 mit einer Kopfanlagefläche 20. Das Kopfanlageteil 13 ist in Richtung x1 zu dem Kopf des Sitzinsassen hin oder in entgegengesetzte Richtung x2 von dem Kopf weg bewegbar. Das Kopfanlageteil 13 umfasst zwei Lagerelemente 14a und 14b, die an einer Kopfanlageschale 41 befestigt sind. Die Kopfanlageschale 41 bildet mit einer hinteren Blende 17 ein Gehäuse der Kopfstütze 10. An der Kopfanlageschale 41 sind ferner ein Polster 15 sowie ein Bezug 16 befestigt.

Mittels einer Verriegelungsvorrichtung 42, die von einem Benutzer an einer Betätigung 19 bedient werden kann, können die z-Position der Basis 11 sowie die X-Position des Kopfanlageteils 13 entriegelt werden. Bei der Betätigung 19 handelt es sich um einen aus der Gehäusewand der Blende 17 freigestellten Bereich, welcher nach innen verformbar ist und durch die elastische Rückstellkraft des Materials bei Entlastung wieder in die Ausgangsform zurückbewegt wird. Die Verriegelungsvorrichtung 42 umfasst einen Verriegelungsschieber 35 zur Arretierung der z-Position der Basis 11 relativ zu den Tragstangen 12a und 12b sowie einen Verriegelungsschieber 36 zur Verriegelung der eingestellten X-Position. Die Verriegelungsschieber 35 und 36 sind in die Richtungen y1 und y2 bewegbar von einer Feder 48 in Richtung y2 in die Verriegelungsposition belastet. Sie können mittels der Betätigung 32 in Richtung y1 in die Löseposition bewegt werden.

Der Verriegelungsschieber 35 umfasst Rastanordnungen 51a und 51b, die in z-Richtung voneinander beabstandete Rastsitze aufweisen, welche mit den Stiften 46 in Eingriff bringbar sind. Der Verriegelungsschieber 36 umfasst Raststege 52a und 52b sowie 53a und 53b, die mit in x-Richtung voneinander beabstandeten Rastsitzen der Lagerelemente 14a und 14b zusammenwirken. Die Rastsitze sind an der Ober- und Unterseite der Lagerelemente 14a und 14b ausgebildet.

Mittels der Handhabe 19, die mit einer Betätigung 32 zusammenwirkt, können die Verriegelungsschieber 35 und 36 aus der Verriegelungsposition in eine Löseposition bewegt werden. Die Betätigung 32 ist im vorliegenden Ausführungsbeispiel als Hebel ausgebildet, welcher um eine Schwenkachse a3 in die Richtungen u1 und u2 schwenkbar ist. Die Schwenkachse a3 wird von einer Lagerachse 49 gebildet, die in einem Sitz 50 schwenkbar gelagert ist. Die Handhabe könnte alternativ z.B. von einem Druckknopf gebildet sein. Das Kopfanlageteil 13 ist dann sowohl in X-, als auch in Z-Richtung bewegbar.

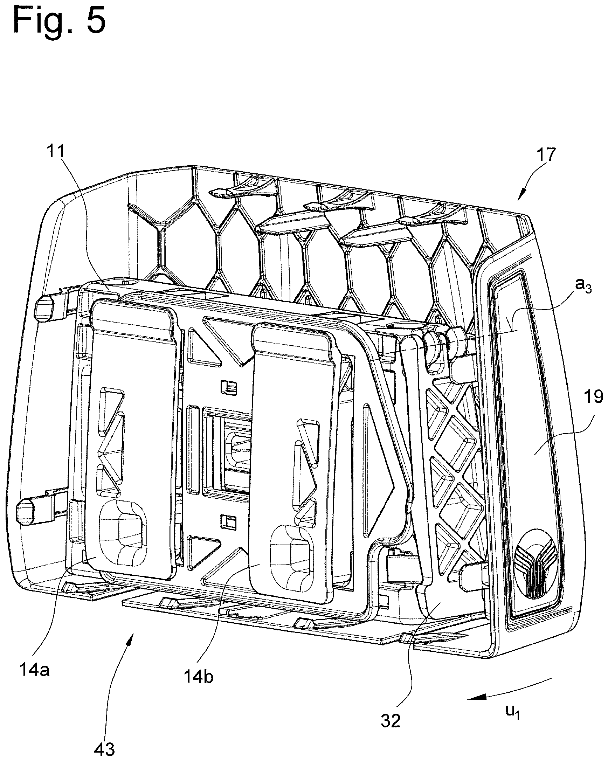

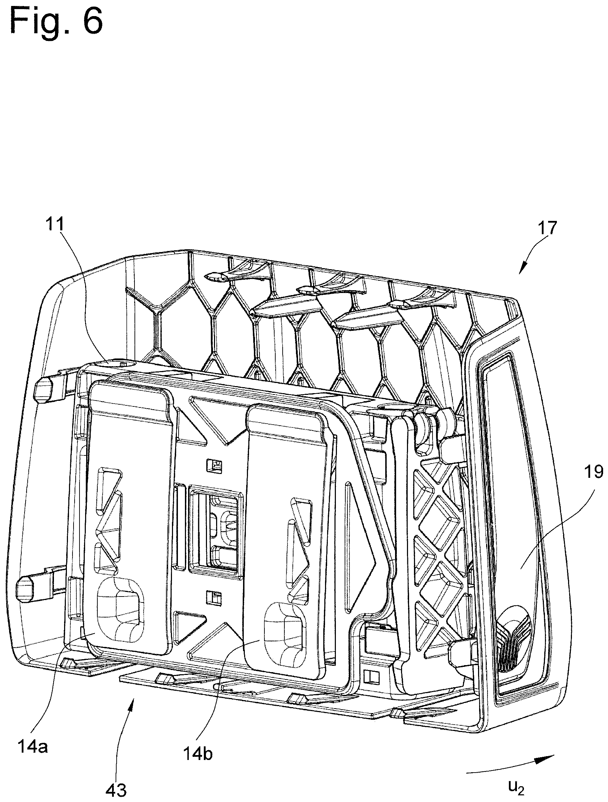

Die Lagerelemente 14a und 14b sind Teil einer Führungsvorrichtung 43. Wie aus den Fig. 5 und 6 ersichtlich sind die Lagerelemente 14a und 14b an dem Basisteil 11 geführt. Das Lagerelement 14a umfasst dafür Zahnschienen 22a und 22b und das Lagerelement 14b umfasst Zahnschienen 24a und 24b. Die Zahnschienen 22a und 24a des Lagerelements 14a sind in z-Richtung voneinander beabstandet und die Verzahnungen weisen zueinander. In gleicher Weise sind die Zahnschienen 22b und 24b des Lagerelements 14b in z-Richtung voneinander beabstandet und die Verzahnungen weisen zueinander.

An dem Basisteil 11 sind Zahnwellen 38 und 39 drehbar gelagert. Die Zahnwellen 38 und 39 sind zwischen den Zahnschienen 22a und 24a sowie 22b und 24b angeordnet. Die Zahnwelle 38 umfasst Zahnräder 21a und 21b, die mit den Zahnschienen 22a und 22b kämmen und die Zahnwelle 39 umfasst Zahnräder 23a und 23b die mit den Zahnschienen 24a und 24b in Eingriff sind. Außerdem sind die Verzahnungen 21a und 23a sowie die Verzahnungen 21b und 23b untereinander in Eingriff. Im vorliegenden Ausführungsbeispiel sind die Zahnräder an der jeweiligen Welle angeformt. Alternativ könnten die Zahnräder aber auch an der Welle befestigt sein. Alle Zahnräder 21a, 21b, 23a, 23b haben den gleichen Durchmesser und sind koaxial zu der jeweiligen Zahnwelle 38 bzw. 39 angeordnet. Die Zahnräder weisen Speichen 30 auf. Die Zahnräder und die Zahnschienen sind mit einer Schrägverzahnung versehen. Alternativ könnte die Verzahnung aber auch z.B. als Geradverzahnung ausgebildet sein.

Auf diese Weise ist das Kopfanlageteil 13 derart geführt, dass ein Kippen um die X-, Y- und um die Z-Achse verhindert wird.

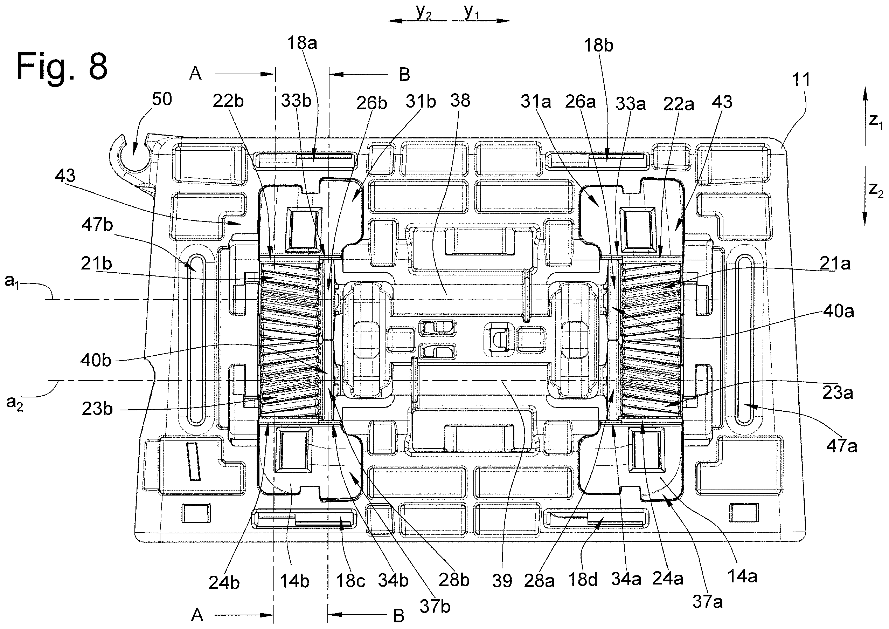

Die Kopfstütze 10 umfasst eine Andrückvorrichtung 40. Die Andrückvorrichtung 40 gewährleistet eine spiel- und klapperfreie Führung des Kopfanlageteils 13. Die Andrückvorrichtung 40 umfasst Räder 25a und 25b, wobei das Rad 25a dem Zahnrad 21a und das Rad 25b dem Zahnrad 21b zugeordnet ist. Dem Zahnrad 23a ist ein Rad 27a und dem Zahnrad 23b ein Rad 27b zugeordnet. Gemäß Fig. 8 sind die Räder 25a und 25b koaxial zu einer Längsmittelachse a1 der Zahnwelle 38 und die Räder 27a und 27b koaxial zu einer Längsmittelachse a2 der Zahnwelle 39 ausgebildet.

Die Räder 25a und 25b weisen Laufflächen 26a und 26b und die Räder 27a und 27b weisen Laufflächen 28a und 28b auf. Die Laufflächen 26a und 28a sowie 26b und 28b stehen untereinander in Kontakt und rollen, wenn das Kopfanlageteil 13 in Richtung x1 oder x2 bewegt wird und dabei die Zahnwellen 38 und 39 gedreht werden, aufeinander ab.

Die Lauffläche 26a steht außerdem mit einer ebenen Lauffläche 33a einer Laufschiene 31a und die Lauffläche 26b mit einer ebenen Lauffläche 33b eine Laufschiene 31b in Kontakt. Die Lauffläche 33a ist seitlich der Zahnschiene 22a und die Lauffläche 33b ist seitlich der Zahnschiene 22b angeordnet. Alle Räder 25a, 25b, 27a, 27b weisen Speichen 29 auf.

Die Lauffläche 28a steht mit einer ebenen Lauffläche 34a des Lagerelements 14a und die Lauffläche 28b mit einer ebenen Lauffläche 34b des Lagerelements 14b in Kontakt. Die Lauffläche 34a ist seitlich der Zahnschiene 24a und die Lauffläche 34b ist seitlich der Zahnschiene 24b angeordnet. Die Lauffläche 34a ist an einer Laufschiene 37a des Lagerelements 14a und die Lauffläche 34b ist an einer Laufschiene 37b des Lagerelements 14b ausgebildet. Die Laufschienen 37a und 37b sind Bereiche des jeweiligen Lagerelements 14a bzw. 14b, die in Gleitkontakt mit der Basis 11 stehen.

Jedes zusammenwirkende Paar von Laufrad und Laufschiene ist derart zueinander angeordnet, dass zwischen den Flächen von Laufrad und Laufschiene eine Übermaßpassung vorliegt. Außerdem liegt zwischen den Laufrädern der Zahnwellen 38 und 39 eine Übermaßpassung vor. Die Welle 38 wird daher in Richtung z1 und die Welle 39 in Richtung z2 belastet. Auf diese Weise existiert zwischen den Verzahnungen ein Toleranzausgleich, mit welchem ein Spiel zwischen den Verzahnungen und damit störende Klappergeräusche verhindert wird.

Die Montage der Kopfstütze wird wie folgt vorgenommen:
Zunächst werden die Lagereinleger 44a und 44b an der Basis 11 montiert. Danach wird der Verriegelungsschieber 35 durch eine seitliche Öffnung 45 der Basis 11 eingesetzt. Im Anschluss werden die Tragstangen 12a und 12b in dafür vorgesehene Öffnungen an der Unterseite der Basis 11 montiert. Jede Tragstange 12a und 12b wird mittels eines Stiftes 46 gesichert. Ein mit der Tragstange 12a verbundener Stift 46 durchgreift ein Langloch 47a und ein mit der Tragstange 12b verbundener Stift 46 durchgreift ein Langloch 47b der Basis 11. Das Kopfanlageteil 13 ist auf diese Weise in die Richtungen z1 und z2 an den Tragstangen 12a und 12b bewegbar.

Anschließend wird der Schieber 36 zur Arretierung der x-Verstellung mit Hilfe von Öffnungen 18a, 18b, 18c, 18d der Basis 11 an der Basis 11 montiert. Danach wird die Rückstellfeder 48 an der Basis 11 verrastet. Die Betätigung 32 wird mit einer Lagerachse 49 mit dem Sitz 50 der Basis 11 in Eingriff gebracht und an einem unteren Bereich mit der Basis 11 verrastet. Darauffolgend werden die Zahnwellen 38 und 39 mit ihrem Sitz an der Basis 11 in Eingriff gebracht.

Auf der Gehäuseschale 41 werden das Polster 15 und der Bezug 16 fixiert. Anschließend werden die Lagerelemente 14a und 14b mit ihrem Sitz an der Gehäuseschale 41 befestigt. Jedes Lagerelement 14a und 14b wird mittels eines nicht dargestellten Stiftes an der Gehäuseschale 41 gesichert. Darauffolgend wird das Kopfanlageteil 13 mit den Lagerelementen 14a und 14b voran in die Basis eingeschoben. Schließlich wird die Blende 17 an den hinteren Endbereichen jedes Lagerelements 14a und 14b sowie an dem Kopfanlageteil 13 befestigt.

## Patentansprüche

1. Fahrzeugausstattungsteil mit einem bewegbaren ersten Teil und einem fahrzeugfesten zweiten Teil, wobei das erste Teil mittels einer Führungsvorrichtung (43) an dem zweiten Teil geführt ist, wobei die Führungsvorrichtung (43) wenigstens eine Zahnschiene (22a, 22b, 24a, 24b) umfasst, die mit einem Zahnrad (21a, 21b, 23a, 23b) in Eingriff steht, wobei die Zahnschiene (22a, 22b, 24a, 24b) einem der Teile und das Zahnrad (21a, 21b, 23a, 23b) dem anderen Teil zugeordnet ist, **dadurch gekennzeichnet, dass** die Führungsvorrichtung zusätzlich eine Toleranzausgleichsvorrichtung umfasst, welcher wenigstens eine Laufschiene (26a, 26b, 28a, 28b) umfasst, die einem der Teile zugeordnet ist und die mit einem Laufrad (25a, 25b, 27a, 27b) in Eingriff steht, welches dem anderen der Teile zugeordnet, wobei das Laufrad (25a, 25b, 27a, 27b) und / oder die Laufschiene (26a, 26b, 28a, 28b) elastisch verformbar ausgebildet ist und zwischen der Laufschiene und dem Laufrad eine Presspassung ausgebildet ist, so dass die zusammenwirkenden Verzahnungen des ersten Teils und des zweiten Teils in eine definierte Position belastet werden.

2. Fahrzeugausstattungsteil nach Anspruch 1, **dadurch gekennzeichnet, dass** die Führungsvorrichtung (43) zwei horizontal und / oder vertikal voneinander beabstandete Zahnschienen (22a, 22b, 24a, 24b) und eine entsprechende Zahl Zahnräder (21a, 21b, 23a, 23b) aufweist.

3. Fahrzeugausstattungsteil nach Anspruch 1 oder 2, **dadurch gekennzeichnet, dass** jeweils zwei Zahnräder einer Zahnradwelle zugeordnet sind.

4. Fahrzeugausstattungsteil nach einem der vorangegangenen Ansprüche, **dadurch gekennzeichnet, dass** die Führungsvorrichtung zwei Zahnradwellen umfasst, wobei jede Zahnradwelle mit zwei Zahnrädern versehen ist und wobei jedes Zahnrad mit einer Zahnschiene in Eingriff steht.

5. Fahrzeugausstattungsteil nach einem der vorangegangenen Ansprüche, **dadurch gekennzeichnet, dass** jeweils zwei Zahnräder einer ersten Zahnradwelle und zwei Zahnräder einer zweiten Zahnradwelle in Eingriff stehen.

6. Fahrzeugausstattungsteil nach einem der vorangegangenen Ansprüche, **dadurch gekennzeichnet, dass** der Führungsvorrichtung wenigstens ein Paar von Laufrad und Zahnschiene zugeordnet sind.

7. Fahrzeugausstattungsteil nach einem der vorangegangenen Ansprüche, **dadurch gekennzeichnet, dass** einer Zahnradwelle wenigstens ein Laufrad und einer mit einem Zahnrad der Zahnradwelle zusammenwirkenden Zahnschiene wenigstens eine Laufschiene zugeordnet ist.

8. Fahrzeugausstattungsteil nach einem der vorangegangenen Ansprüche, **dadurch gekennzeichnet, dass** jedem Zahnrad ein Laufrad zugeordnet ist und jeder Zahnschiene eine Laufschiene zugeordnet ist, wobei ein Laufrad und eine Laufschiene in Eingriff stehen.

9. Fahrzeugausstattungsteil nach einem der vorangegangenen Ansprüche, **dadurch gekennzeichnet, dass** die Laufschienen den Zahnschienen benachbart angeordnet sind und dass die Laufräder den Zahnrädern benachbart angeordnet sind.

10. Fahrzeugausstattungsteil nach einem der vorangegangenen Ansprüche, **dadurch gekennzeichnet, dass** das Fahrzeugausstattungsteil eine Kopfstütze ist, wobei das erste Teil ein Kopfanlageteil ist, welches relativ zu einer Basis als zweitem Teil bewegbar ist.

11. Fahrzeugausstattungsteil nach einem der vorangegangenen Ansprüche, **dadurch gekennzeichnet, dass** das Fahrzeugausstattungsteil eine Armlehne ist, wobei das erste Teil eine in Längsrichtung verstellbare oder eine in der Höhe verstellbare Armauflage ist, welche an einer Basis als zweiten Teil geführt ist.
